# EUROPÄISCHE PATENTSCHRIFT

(11) **EP 3 231 691 B1**
(45) Veröffentlichungstag und Bekanntmachung des Hinweises auf die Patenterteilung: **04.03.2020**
(21) Anmeldenummer: 16164870.4
(22) Anmeldetag: 12.04.2016
(51) Int. Cl.: B62D 21/20, B60P 1/00

(54) **SELBSTTRAGENDER FAHRZEUGTRANSPORT-ANHÄNGER**
SELF-SUPPORTING VEHICLE TRANSPORT TRAILER
REMORQUE DE TRANSPORT DE VEHICULE AUTOPORTEUSE

(43) Veröffentlichungstag der Anmeldung: 18.10.2017
(73) Patentinhaber: Henschel Engineering Automotive SP. z o.o., 66-470 Kostrzyn nad Odra (PL)
(72) Erfinder: Boldirev, Alexander, 49009 Osnabrück (DE); Buddendick, Christian, 49009 Osnabrück (DE); Eisner, Peter, 49009 Osnabrück (DE); Johanning, Bernd, 49009 Osnabrück (DE); Lügering, Jan, 49009 Osnabrück (DE); Molitor, Arne, 49009 Osnabrück (DE); Prediger, Viktor, 49009 Osnabrück (DE); Schäfers, Christian, 49009 Osnabrück (DE); Schneider, Waldemar, 49009 Osnabrück (DE); Daniel, Steven, 49009 Osnabrück (DE)
(74) Vertreter: Gille Hrabal

(56) Entgegenhaltungen:
- EP-A1- 0 997 342
- FR-A1- 2 910 579
- GB-A- 530 873
- US-A- 1 928 859
- US-A1- 2015 322 975
- US-B1- 7 980 805

## Beschreibung

Die Erfindung betrifft einen selbsttragenden Fahrzeugtransport-Anhänger mit einem Fahrwerk (1), einem Aufbau (3), einer Anhängerdeichsel (2) und einer Abschiebevorrichtung (4), wobei der Fahrzeugtransport-Anhänger weiterhin durch die Merkmale des Anspruchs 1 gekennzeichnet ist.

### EINLEITUNG:

Fahrzeugtransport-Anhänger zum Aufnehmen, Transportieren und Abladen von Gütern sind weithin bekannt. In der Regel sind herkömmliche Fahrzeugtransport-Anhänger so konstruiert, dass das Fahrwerk mit einer tragenden Konstruktion wie einem Rahmen oder Tragwerk versehen ist, auf den der Aufbau zum Aufnehmen der zu transportierenden Güter aufgesetzt wird. Bei dem Fahrzeugtransport-Anhänger der vorliegenden Erfindung handelt es sich hingegen um einen Fahrzeugtransport-Anhänger, der in selbsttragender Bauweise konstruiert ist, nämlich insbesondere um einen selbsttragenden Schwerlasttransport-Anhänger für Schwerlast-Zugmaschinen wie Lastkraftwagen (LKW's) und/oder Traktoren, der mit einem Fahrwerk verbunden werden kann, ohne dass eine zusätzliche Trag- oder Rahmenkonstruktion notwendig ist. Insbesondere handelt es sich bei dem erfindungsgemäßen Fahzeugtransport-Anhänger um einen solchen zum Einsatz in der Landwirtschaft. Ein besonders bevorzugter Aspekt der Erfindung betrifft einen selbsttragenden landwirtschaftlichen Abschiebewagen.

Ein Abschiebewagen ist ein Anhänger, der üblicherweise mithilfe einer verschiebbaren Frontwand das Ladegut entlädt. Dabei wird üblicherweise die Frontwand des Anhängers oder ein sogenannter Abschiebeschlitten mithilfe mehrerer Teleskophydraulikzylinder in Richtung des Anhängerhecks bewegt. Am hinteren Ende des Anhängers ist üblicherweise eine Volumenheckklappe montiert die neben der eigentlichen Rückwand aus einem Stück Boden besteht, womit sich die Ladefläche nach hinten verlängert, ohne dass der Abschiebeschlitten ihn abschieben muss. Durch das Hochklappen der Heckklappe wird dieser Abschnitt entladen. Varianten eines solchen Abschiebeschlittens arbeiten zusätzlich zu dem eigentlichen Schiebeprinzip mit Hubzylindern, die ein Kippen des Abschiebeschlittens ermöglichen. Abschiebewagen werden üblicherweise in der Landwirtschaft eingesetzt.

Aus dem Stand der Technik sind Fahrzeugtransport-Anhänger in selbsttragender Bauweise grundsätzlich bekannt, wie beispielsweise aus der DE202009008642 U1, aus der EP1052163 A2 oder aus der EP0997342 A1.

Auch landwirtschaftliche Abschiebewagen sind weithin bekannt, beispielsweise aus der EP2767434 A1, der DE102012004326 A1, der DE202010002249 U1 oder aus der DE102009035038 A1. Derartige spezielle Fahzeugtransport-Anhänger, nämlich Abschiebewagen, in selbsttragender Bauweise sind bisher nicht bekannt.

Bei herkömmlichen nicht-selbsttragenden Fahrzeugtransport-Anhängern, insbesondere auch bei den bekannten und vorgenannten Abschiebewagen, wird der den Laderaum bildende Aufbau mittels eines Tragrahmens (Leiterrahmen) oder einer ähnlichen Tragkonstruktion mit dem Fahrwerk verbunden. Damit weisen die herkömmliche Fahzeugtransport-Anhänger üblicherweise eine ebene, horizontal gleichförmige und horizontal durchgehende Aufbau-Unterseite auf, über die der Aufbau auf der Tragkonstruktion des Fahrwerks angebracht wird. Insbesondere die herkömmlichen Abschiebewagen weisen eine ebene, horizontal gleichförmige und horizontal durchgehende Unterseite auf.

Außerdem sind Ausführungsformen eines Abschiebewagens bekannt, welche eine Abschiebevorrichtung in Form beweglicher Böden oder Abschiebevorrichtungen in Form von Förderbändern oder beweglichen Elementen aufweisen können, wie z.B. in der oben genannten EP0997342 A1, der US 1928859, der US 7980805 B1 oder der FR 2910579 gezeigt. Darin können die beweglichen Böden auch auf unterschiedlichen Ebenen auf dem die Unterseite des Laderaums (Mulde) bildenden Unterboden angeordnet sein und so innerhalb der Mulde eine Art Tunnel bilden, wie z.B in der US 2015/322975 A1 oder der GB 530873 gezeigt, wobei die in GB 530873 gezeigten Anhänger innerhalb des Laderaums bewebliche Elemente aufweisen um Ladegut variabler Größe zu fixieren. In derartigen bekannten Ausführungsformen ist ein entsprechender Tunnel in der Regel nicht über die gesamte Länge der Mulde ausgebildet. Auch führt die Ausbildung eines entsprechenden Tunnels im Inneren der Mulde (also oberhalb des die Unterseite der Mulde bildenden Bodens) zu einer Verringerung des Ladevolumens, da die Abschiebehydraulik ebenfalls innerhalb der Mulde untergebracht werden muss, wie z.B. in den Anhängern gemäß US 2015/322975 A1, und die gesetzlich vorgegebenen Maximalhöhe nicht überschritten werden darf. Die ebene, horizontal gleichförmige und horizontal durchgehende Aufbau-Unterseite wird in derartigen bekannten Ausführungsformen über die vorgenannten Träger- oder Rahmenkonstruktionen mit dem Fahrwerk verbunden.

### AUFGABE:

Die Aufgabe der vorliegenden Erfindung bestand nun darin, einen verbesserten Fahrzeugtransport-Anhänger bereitzustellen, insbesondere einen verbesserten Abschiebewagen, der besonders für die landwirtschaftliche Nutzung geeignet ist, und der einen oder mehrere der folgenden Vorteile bietet, wie eine optimierte Ausnutzung und Maximierung des möglichen Ladevolumens, eine hohe Materialeffizienz, geringes Leergewicht, platzoptimierte Bauweise, optimiertes Verhältnis von Leergewicht zu Ladegewicht und von Fahrzeugabmessungen zu Ladevolumen, optimierte Schwerpunktlage und damit Verbesserung der Fahrstabilität und -sicherheit, insbesondere in unwegsamem landwirtschaftlichem Gelände (Off-Road Nutzung).

### DETAILLIERTE BESCHREIBUNG DER ERFINDUNG:

Die Lösung der vorstehenden Aufgabe gelingt durch die Konstruktion eines erfindungsgemäßen Fahzeugtransport-Anhängers, der durch die Merkmale des Anspruchs 1 charakterisiert ist. Vorteilhafte Ausgestaltungen sind Gegenstand der Unteransprüche.

Gegenstand der Erfindung sind somit Fahrzeugtransport-Anhänger mit einem Fahrwerk (1), einem Aufbau (3), einer Anhängerdeichsel (2) und einer Abschiebevorrichtung (4), wobei die erfindungsgemäßen Fahzeugtransport-Anhänger dadurch gekennzeichnet sind, dass der Aufbau (3) in selbsttragender Bauweise ausgeführt ist und dieser eine Mulde (5) mit Seitenwänden (6a, 6b), einer Frontwand (6c), einer Heckklappe (7) und einem Boden (8), sowie gegebenenfalls einem Dach oder einer Abdeckung (10) umfasst, worin der Boden (8) eine über die Länge der Mulde (5) verlaufende Vertiefung in Form eines auf der Ebene des Bodens (B_{E}) offenen Kanals oder Tunnels (9) aufweist, und worin die Mulde (5) einen oder mehrere Aufnahmepunkte (11) zur Befestigung des Fahrwerks (1) aufweist.

Erfindungsgemäß handelt es sich bevorzugt um Fahrzeugtransport-Anhänger in der Art eines Schwerlastanhängers, insbesondere um solche für die Landtechnik, welche bevorzugt ein zulässiges Gesamtgewicht (zGG) im Rahmen des jeweils gesetzlich zugelassenen zGG aufweisen. In der Landtechnik beträgt beispielsweise das zGG 40 t mit einer zulässigen Achslast von 10 t. Derartige Schwerlastanhänger sind insbesondere für Schwerlast-Zugmaschinen wie Lastkraftwagen (LKW's), Traktoren und ähnliche geeignete Zugmaschinen vorgesehen.

Der Aufbau (3) der erfindungsgemäßen Fahzeugtransport-Anhänger ist in selbsttragender Bauweise ausgeführt, das heißt der Aufbau (3) kann ohne Verwendung einer zusätzlichen Rahmen- oder Tragkonstruktion mit dem Fahrwerk (Rädern, Achsen, Fahrwerkdämpfungssystem) verbunden werden. Dies bringt den Vorteil einer höheren Materialeffizienz und eines geringeren Gesamtgewichts mit sich, da in der Gesamtkonstruktion des Fahrzeugtransport-Anhängers auf den zusätzlichen Rahmen verzichtet werden kann.

Bevorzugt ist der Aufbau (3) in Leichtbauweise ausgeführt, was unter anderem auch dadurch erreicht wird, dass aufgrund der selbsttragenden Bauweise der Trag- oder Leiterrahmen wegfallen kann. Dies bringt den Vorteil eines geringeren Gesamtgewichts des Fahrzeugtransport-Anhängers mit sich.

Um eine höchstmögliche Stabilität des Fahzeugtransport-Anhängers zu erreichen, die insbesondere für die selbsttragende Konstruktionsweise notwendig ist, wird der Aufbau (3) bevorzugt aus hochfestem Stahl konstruiert. Darunter ist erfindungsgemäß zu verstehen, dass insbesondere die tragenden Elemente des Aufbaus (3) aus hochfestem Stahl gebildet werden.

Der erfindungsgemäße Fahzeugtransport-Anhänger ist insbesondere durch den selbsttragenden Aufbau (3) gekennzeichnet, der in Form einer Mulde (5) mit entlang der Fahrtrichtung parallel zueinander verlaufenden Seitenwänden (6a, 6b), einer die Seitenwände verbindenden Frontwand (6c), einer der Frontwand in paralleler Anordnung gegenüberliegenden öffenbaren Heckklappe (7) und einem die Fläche zwischen den Seitwänden und der Frontwand und der (geschlossenen) Heckklappe bildenden Boden (8) ausgebildet wird. Die Frontwand (6c) unterliegt keinen besonderen Beschränkungen und kann in üblicher Weise ausgestaltet sein. Die Frontwand (6c) kann insbesondere geschlossen oder ganz bzw. teilweise offen ausgebildet sein, wie beispielhaft in den Figuren dargestellt.

Die Mulde (5) des erfindungsgemäßen Aufbaus (3) ist insbesondere dadurch gekennzeichnet, dass der Boden (8) eine Vertiefung in Form eines Kanals oder Tunnels (9) aufweist. Dieser Kanal oder Tunnel (9) erstreckt sich mit seinen Tunnel-Seitenwänden (9a, 9b) auf eine unterhalb der Ebene des Bodens (B_{E}) gelegene Ebene des Tunnelbodens (T_{E}) und ist auf der Ebene des Bodens (B_{E}) zu dem durch den Boden (8) gebildeten Laderaum der Mulde (5) offen. Der Kanal oder Tunnel (9) ist somit unterhalb der bzw. auf der durch den Boden (8) gebildeten Unterseite der Mulde (5) angeordnet und der Tunnelboden (8a) bildet den tiefsten Punkt der Mulde (5) und erstreckt sich auf einer Ebene (T_{E}), die unterhalb der Ebene des Bodens (B_{E}) angeordnet ist. Der Kanal oder Tunnel (9) verläuft in der Richtung parallel zu den Seitenwänden (6a, 6b), also entlang der Fahrt- oder Abschieberichtung (F_{R}) und erstreckt sich bevorzugt über die gesamte (bzw. nahezu gesamte) Länge der Mulde (5). Dies ermöglicht einerseits eine größtmögliche Ausnutzung des durch den offenen Tunnel erzielbaren zusätzlichen Ladevolumens, wie nachfolgend beschrieben, andererseits ist dies vorteilhaft bei der zusätzlichen Anbringung einer Abschiebevorrichtung, wie nachfolgend noch im Detail ausgeführt.

Die Konstruktion eines unterhalb der Ebene des Bodens (B_{E}) ausgebildeten Kanals oder Tunnels (9) bringt meherer Vorteile mit sich. Der unterhalb der durch den Boden (8) gebildeten Unterseite des Aufbaus (3) angeordnete Kanal oder Tunnel (9) wird hinsichtlich seiner Breite und Höhe so dimensioniert, dass er in dem Zwischenraum angeordnet werden kann, der sich zwischen den Rädern und über der Achsen ergibt. Dadurch verringert sich der Abstand zwischen den Achsen des Fahrwerks (1) und dem tiefsten Punkt der Unterseite der Mulde (5). Dies resultiert in einem tieferen Schwerpunkt der Mulde (5), was sich vorteilhaft auf die Fahrstabilität auswirkt und eine verbesserte Straßenlage und höhere Fahrsicherheit bewirkt. Ein tieferer Schwerpunkt und eine damit verbesserte Fahrstabilität und Straßenlage ist besonders im landwirtschaftlichen Einsatz und auf unwegsamerem Gelände wie z.B. auf unbefestigten Wegen oder auf einem Feld (Off-Road Nutzung) vorteilhaft. Durch den durch die erfindungsgemäße Tunnel-Konstruktion der Mulde erzielbaren tieferen Schwerpunkt wird außerdem eine verbesserte Stabilität des Fahrzeugtransport-Anhängers beim Entladen und damit eine erhöhte persönliche Sicherheit der Personen erreicht, die den Entladevorgang vornehmen.

Außerdem wird durch die erfindungsgemäße Anordnung eines zur Ebene des Bodens (B_{E}) offenen Kanals oder Tunnels (9), der unterhalb der durch den Boden (8) gebildeten Unterseite des Aufbaus (3) angeordnet ist, der durch Seitenwände, Frontwand, Heckklappe und Boden gebildete Laderaum der Mulde (5) um das Volumen dieses offenen Tunnels vergrößert, was eine Vergrößerung des möglichen Gesamtladevolumens ermöglicht. Es wird also zusätzlicher Laderaum geschaffen, der platzoptimiert in dem durch die Achsen und Räder gebildeten Zwischenraum angeordnet ist. Es kann somit ein selbsttragender Fahrzeugtransport-Anhänger mit einem gegenüber herkömmlichen Fahrzeugtransport-Anhängern zusätzlichen bzw. vergrößerten Ladevolumen bereitgestellt werden. Die erfindungsgemäßen Fahrzeugtransport-Anhänger können somit durch die erfingungsgemäße Ausgestaltung der Mulde (5) ein zusätzliches Ladevolumen von bis zu 4 bis 5 Kubikmetern aufnehmen. Das Gesamtladevolumen der erfindungsgemäßen Fahrzeugtransport-Anhänger ergibt sich folglich durch die Dimensionierung der Seitenwände, der Frontwand, der Heckklappe und des Tunnels (9) und ist nach oben hin einerseits durch gesetzliche Vorgaben zur Maximalgröße eines Anhänger-Aufbaus (3) und die maximal mögliche Dimensionierung des Tunnels (9) beschränkt. Die maximale Länge des erfindungsgemäßen Fahrzeugtransport-Anhängers beträgt bevorzugt 12,0 m, gemessen von der Kupplung zur Zugmaschine bis zur Heckklappe (7). Die maximale Breite der Mulde (5) beträgt bevorzugt 2,55 m, gemessen von Seitenwand zu Seitenwand Die Achse des Fahrwerks des erfindungsgemäßen Fahrzeugtransport-Anhängers ist bevorzugt auf einer Höhe von 0,7 m über dem Boden angeordnet.

Die Mulde (5) des erfindungsgemäßen Aufbaus (3) weist mindestens einen, bevorzugt mindestens zwei oder mehrere Aufnahmepunkte (11), in Abhängigkeit von den vorhandenen Achsen, zur Befestigung des Fahrwerks (1), umfassend Räder, Achse(n) und Fahrwerkfederung mit Dämpferzylindern, auf. Beispielsweise sind bei bevorzugt verwendeten Achsen vier Aufnahmepunkte (Triangel, linker und rechter Dämpfer und Panhardstabe) vorgesehen. Je nach Anzahl der Achsen weist die Mulde (5) eine entsprechende Anzahl von Aufnahmepunkten (11) auf. Die Aufnahmepunkte (11) sind so ausgestaltet, dass daran einerseits die Achsen und außerdem die Dämpferylinder der Fahrwerkfederung befestigt werden können. Somit ist es erfindungsgemäß bevorzugt, dass je Achse zwei Aufnahmepunkte (11) vorgesehen werden, wobei diese dann auf gleicher Höhe und auf einander gegenüberliegenden Seiten der Mulde und auf der Höhe der Räder und Dämpferzylinder angeordnet sind, wodurch der Tunnel (9) dann mittig zwischen diesen beiden einander gegenüberliegenden Aufnahmepunkten (11) positioniert ist.

Bedingt durch die vorgesehene Anordnung des Mulden-Tunnels (9) in dem durch die Achsen und Räder gebildeten Zwischenraum werden die erfindungsgemäßen Fahrzeugtransport-Anhänger bevorzugt mit einer pneumatischen Fahrwerkfederung oder einer hydraulischen Fahrwerkfederung ausgestattet, da eine herkömmliche mechanische Blattfederung nicht genügend Raum zur Aufnahme des Mulden-Tunnels (9) lassen würde. Ganz besonders bevorzugt werden die erfindungsgemäßen Fahrzeugtransport-Anhänger mit einer hydraulischen Fahrwerkfederung ausgestattet, da diese über die besten Dämpfungseigenschaften verfügt und damit insbesondere für die erfindungsgemäß bevorzugte landwirtschaftliche Nutzung die besten Dämpfungseigenschaften im Off-Road Einsatz gewährleistet.

Die Mulde (5) des Aufbaus (3) kann nach oben hin offen ausgebildet sein oder ein Dach bzw. eine andere geeignete Abdeckung (10) aufweisen. Möglich ist beispielsweise auch eine Abdeckung in Form einer abnehmbaren flexiblen Plane oder ähnliches, wobei die Mulde (5) für derartige Ausführungsformen gegebenenfalls geeignete Befestigungsvorrichtungen an den Seitenwänden (6a, 6b) und/oder an der Frontwand (6c) und/oder an der Heckklappe (7) aufweist.

Die Heckklappe (7) des erfindungsgemäßen Aufbaus (3) ist öffenbar und kann nach oben, nach unten oder seitlich öffenbar ausgeführt sein, wobei eine Ausführungsform mit nach oben oder seitlich öffenbarer Heckklappe (7) bevorzugt ist. Ganz besonders bevorzugt wird die Heckklappe (7) seitlich öffenbar ausgeführt.

Den Erfordernissen der Strassenverkehrszulassungsordnung entsprechend weist der erfindungsgemäße Fahrzeugtransport-Anhänger einen Unterfahrschutz auf. Dieser ist entsprechend der gesetzlichen Vorgaben dimensioniert und wird erfindungsgemäß bevorzugt an der öffenbaren Heckklappe (7) angebracht. Durch diese neue Konstruktionsweise, worin der Unterfahrschutz (7a) fest an der öffenbaren Heckklappe (7) fixiert ist, schwenkt der Unterfahrschutz beim Öffnen der Heckklappe zum Entladen des Fahrzeugtransport-Anhängers zusammen mit der Heckklappe nach oben, nach unten oder zur Seite weg (entsprechend der Öffnungsrichtung der Heckklappe).

Bei herkömmlichen Fahrzeugtransport-Anhängern, die mittels eines Rahmens mit dem Fahrwerk verbunden werden, ist der Unterfahrschutz üblicherweise an dem Rahmen bzw. der Tragkonstruktion des Fahrwerks angeordnet. Durch diese Anordnung befindet sich der Unterfahrschutz zum Zeitpunkt der Entladung des Fahrzeugtransport-Anhängers über die (geöffnete) Heckklappe notwendigerweise unterhalb des (geöffneten) Hecks. Eine derartige Anordnung des Unterfahrschutzes kann bei einer Entladung über das Heck störend sein, insbesondere wenn es sich bei dem Fahrzeugtransport-Anhänger um einen Abschiebewagen handelt, bei dem das Ladegut über die geöffnete Heckklappe von dem Fahrzeugtransport-Anhänger entladen (abgeschoben) wird. Das Ladegut fällt dann beim Abschiebevorgang über und auf den am Rahmen fixierten Unterfahrschutz. Dies kann z.B. zu einer unerwünschten Verschmutzung des Ladeguts führen. Gegebenenfalls behindert eine entsprechende Anordnung des Unterfahrschutzes auch die optimale Positionierung einer Vorrichtung oder eines Aufnahmebehälters, in die das Ladegut abgeschoben werden soll. Konstruktionen, worin ein unter dem Heck (z.B. am Rahmen oder auch an einem selbsttragenden Aufbau) angeordneter Unterfahrschutz abnehmbar oder unter den Anhänger abschwenkbar ausgebildet ist, sind ebenfalls denkbar und von der vorliegenden Erfindung grundsätzlich umfasst. Aufgrund der damit verbundenen aufwändigeren Konstruktionsweise und unpraktikableren Handhabbarkeit beim Entfernen vor dem Abladevorgang sind derartige bewegbaren (variable) Unterfahrschutz-Konstruktionen gegenüber der bevorzugten Ausführungsform mit fester Fixierung an der öffenbaren Heckklappe jedoch weniger bevorzugt.

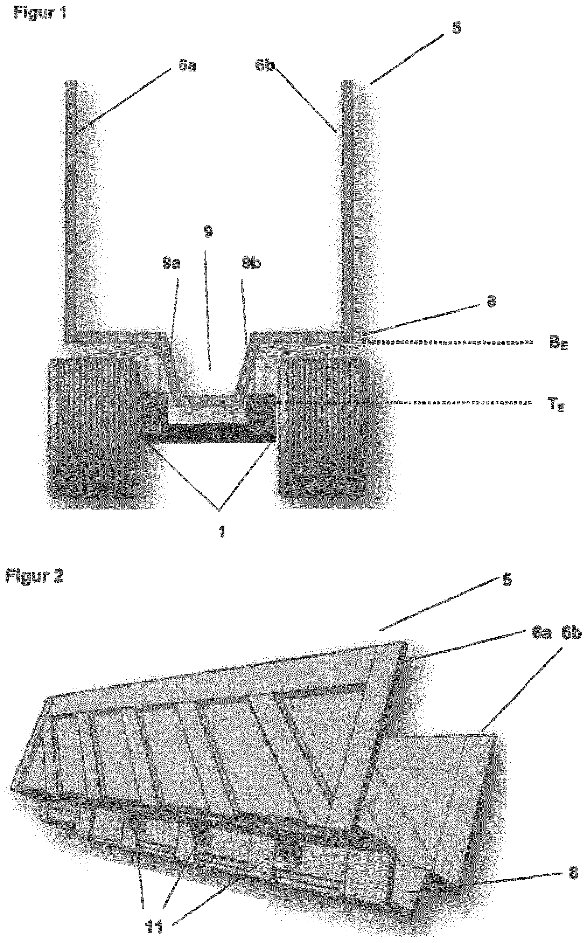

Der erfindungsgemäße Fahrzeugtransport-Anhänger weist eine übliche Anhängerdeichsel (2) auf, die in herkömmlicher Weise mit der Anhängerkupplung eines Zugfahrzeugs verbunden werden kann. Beispielhafte und bevorzugte Ausführungsformen erfindungsgemäßer Fahrzeugtransport-Anhänger zeigen die Figuren 1 bis 7.

Der erfindungsgemäße Fahrzeugtransport-Anhänger ist ein Abschiebewagen, der eine Abschiebevorrichtung (4) aufweist. In einem Fahrzeugtransport-Anhänger in Form eines Abschiebewagens wird die vorgesehene Abschiebevorrichtung (4) bevorzugt durch einen sogenannten Abschiebeschlitten (12) gebildet.

Ein erfindungsgemäß besonders bevorzugter Abschiebeschlitten (12) umfasst wenigstens zwei zueinander im Wesentlichen rechtwinkling oder L-förmig angeordneten Abschiebeflächen (12a, 12b). Solche L-förmigen Abschiebeschlitten zum Verschieben des Ladeguts über eine ebene Ladefläche sind grundsätzlich bekannt. Die erfindungsgemäß besonders bevorzugten Abschiebeschlitten (12) unterscheiden sich von den bekannten L-förmigen Abschiebeschlitten dahingehend, dass darin eine der Abschiebeflächen (12a) parallel zu und über die Ebene des Bodens (B_{E}) verläuft und eine dazu im Wesentlichen rechtwinklig oder L-förmig angeordnete weitere Abschiebefläche (12b) parallel zur Frontwand (6c) angeordnet ist und außerdem eine weitere Abschiebefläche vorgesehen ist, die das in dem Tunnel (9) befindliche Ladegut abschiebt. Diese zusätzliche Abschiebefläche im Tunnel (9) kann parallel zu und über die Ebene des Tunnelbodens (T_{E}) verlaufend ausgebildet sein und/oder horizontal (parallel zur Frontwant) in der Art eines den Querschnitt des Tunnels (9) ausfüllenden Schildes ausgebildet sein, so dass diese zusätzliche Abschiebefläche geeignet ist, das in dem Tunnel (9) befindliche zusätzliche Ladegut mit abzuschieben. Dabei sind die Abschiebeflächen (12a, 12b) jeweils so dimensioniert, dass sie jeweils über die gesamte Breite der Mulde (5) verlaufen. Die parallel zur Frontwand (6c) angeordnete Abschiebefläche (12b) ist so dimensioniert, dass sie zumindest entlang eines Teils der Höhe der Mulde (5) verläuft und sich bis zur Ebene des Tunnelbodens (T_{E}) erstreckt, wobei es bevorzugt ist, dass diese parallel zur Frontwand (6c) angeordnete Abschiebefläche (12b) in ihrer vertikalen Ausdehnung der Höhe der Frontwand (6c) entspricht und entsprechend entlang der gesamten Höhe der Mulde (5) inklusive der Höhe des Tunnels (9) verläuft.

Entsprechend ist es erfindungsgemäß besonders bevorzugt, dass der Abschiebeschlitten (12) der Abschiebevorrichtung (4) eine im Wesentlichen L-förmige Anordnung von mindestens zwei Abschiebeflächen (12a, 12b), bevorzugt mindestens drei Abschiebeflächen, umfasst, die so ausgestaltet sind, dass die mindestens, bevorzugt zwei, parallel zur Frontwand (6c) stehende(n) Abschiebefläche(n) (12b) in ihrer Dimensionierung an den Querschnitt der Mulde (5) inklusive des Querschnitts des Tunnels (9) angepasst ist und diesen Gesamtquerschnitt der Mulde im Wesentlichen ausfüllt.

Desweiteren sind die Abschiebeflächen (12a, 12b) des Abschiebeschlittens (12) der Abschiebevorrichtung (4) bevorzugt so ausgestaltet, daß sie möglichst unmittelbar, also im Wesentlichen bündig über die Ebene des Bodens (B_{E}) und die Ebene des Tunnelbodens (T_{E}) und entlang der Seitenwände (6a, 6b) der Mulde (5) und der Seitenwände des Tunnels (9a, 9b) in einer Fahrt- oder Abschieberichtung (F_{R}) beweglich sind, so dass damit ein in der Mulde (5) und in dem Tunnel (9) vorhandenes Ladegut über die Ladefläche (gebildet aus Bodenfläche inklusive Tunnelbodenfläche) entlang der Länge der Mulde (5), also entlang der Fahrt- oder Abschieberichtung (F_{R}), verschoben werden kann, um über die geöffnete Heckklappe (7) abgeschoben und entladen zu werden.

Durch eine derartige Dimensionierung des Abschiebeschlittens wird gewährleistet, dass die Abschiebeflächen (12a, 12b) die gesamte Breite und die gesamte Höhe, also den gesamten Querschnitt, der Mulde (5) mit dem Tunnel (9) erfassen können und das darin befindliche Ladegut vollständig über den Boden der Mulde (5) und den Boden des durch den Tunnel (9) zusätzlich geschaffenen Laderaums abschieben können. Eine L-förmige Ausbildung eines entsprechenden Abschiebeschlittens kann auch Ausführungsformen umfassen, worin die Abschiebeflächen (12a) keilförmige oder zum Boden der Mulde und/oder zum Tunnelboden (8a) abwärts verlaufende schiefe Ebenen bilden (12c). Durch derartige geneigte Abschiebeflächen (12a) kann eine besonders effiziente Abschiebung des Ladeguts ermöglicht werden.

In einer weiteren besonders bevorzugten Ausführungsform der erfindungsgemäßen Fahrzeugtransport-Anhänger in Ausgestaltung eines Abschiebewagens, wird die Abschiebevorrichtung (4) zusätzlich zu den vorgenannten Merkmalen außerdem kippbar ausgestaltet. In derartigen Ausführungsformen weist die Abschiebevorrichtung (4) zusätzlich eine Kippvorrichtung (14) auf, mittels derer der Abschiebeschlitten (12) der Abschiebevorrichtung (4) außerdem über eine freie Kante (12a', 12b') der Abschiebefläche (12a, 12b) kippbar ist, so daß auf der Abschiebefläche (12a) aufliegendes Ladegut über diese freie Kante (12a', 12b') abgekippt werden kann. Dadurch wird eine vollständige Entladung des Ladeguts erreicht und auch die auf den Abschiebeflächen (12a) aufliegenden Teile des Ladeguts können im Anschluß an den Verschiebevorgang über den Muldenboden (inkl. Tunnelboden (8a)) einfach über die Heckklappe abgekippt und damit entladen werden.

Erfindungsgemäß bevorzugte Fahrzeugtransport-Anhänger in Form eines Abschiebewagens, insbesondere solche Ausführungsformen davon wie vorstehend beschrieben, umfassen eine Abschiebevorrichtung (4) mit einem Zylindersystem (15), welches ein Ausstoßzylindersystem (13) umfasst, worin das Ausstoßzylindersystem (13) bevorzugt ein mindestens dreiteiliges Zylindersystem ist, welches mindestens einen Teleskopzylinder (13a) und mindestens zwei doppelwirkende Ausstoßzylinder (13b, 13c) umfasst, welche bevorzugt ebenfalls Teleskopzylinder sind. Die Zylinder des Ausstoßzylindersystems (13) bewirken das Bewegen und Verschieben des Abschiebeschlittens (12) über den Boden (8) der Mulde (inklusive Tunnelboden (8a)) über die Länge der Mulde (5), also entlang der Fahrt- oder Abschieberichtung (F_{R}).

In den besonders bevorzugten Ausführungsformen eines Abschiebewagens mit zusätzlich kippbarer Abschiebevorrichtung (4) umfasst die dazu vorgesehene Kippvorrichtung (14) mindestens einen, bevorzugt mindestens zwei Kippzylinder (14').

Das erfindungsgemäße Zylindersystem umfasst somit mindestens das Ausstoßzylindersystem (13), in den besonders bevorzugten Ausführungsformen mit zusätzlicher Kippvorrichtung (14) jedoch mindestens das Ausstoßzylindersystem (13) und den mindestens einen, bevorzugt mindestens zwei, Kippzylinder (14').

Erfindungsgemäß ist es außerdem bevorzugt, dass das vorgenannte Ausstoßzylindersystem (13) und/oder der mindestens eine Kippzylinder (14') der Kippvorrichtung (14) des Zylindersystems (15) hydraulische Zylinder sind.

Darin ist außerdem besonders bevorzugt, daß die Ölversorgung der hydraulischen Zylinder (13a, 13b, 13c, 14') innerhalb der Zylinder verläuft und damit die Ölleitungen innerhalb der jeweiligen Zylinder über die Verschiebe- bzw. Kippstrecke mitgeführt werden. Bevorzugt werden die Ölleitungen dabei beim Verschieben des Abschiebeschlittens (12) über die gesamte Ladefläche in Fahr- oder Abschieberichtung (F_{R}) innerhalb der Zylinder mitgeführt.

Der damit verbundene Vorteil liegt darin, dass die Ölleitungen beim Bewegen der Zylinder nicht über die Deichsel und über die gesamte Abschiebestrecke außerhalb der Zylinder mitgeführt werden müssen, wie es bei üblichen hydraulischen Abschiebezylindersystemen der Fall ist. Damit kann vermieden werden, dass die äußerlich mitgeführten Ölleitungen beim Bewegen an weiteren Bauteilen (z.B. der Deichsel) hängenbleiben und ggf. sogar abreißen, eine übermäßige mechanische Belastung der hin- und hergeführten äußerlich mitgeführten Ölleitungen wird reduziert, was das Risiko von Ermüdungsbrüchen und Leckagen in den Ölleitungen oder an den Anschlußstellen und Befestigungsschellen, was zu einem Verschmutzen des Laderaums und/oder sogar des Ladeguts führen würde, verringert. Auch kann ein Verschmutzen von Ölleitungen und Ladegut und Anhaften von Ladegut durch die freiliegenden äußerlich mitgeführten Ölleitungen vermieden werden.

Außerdem ist es bevorzugt, dass die Ölversorgung der hydraulischen Zylinder über starre Ölleitungen innerhalb der Zylinder (13a, 13b, 13c, 14') erfolgt, wobei starre Ölleitungen meint, dass diese ausschließlich relativ zueinander beweglich sind. Selbstverständlich müssen die Ölleitungen mit dem Verschieben Abschiebeschlittens (12) über die Länge der Verschiebestrecke beweglich sein.

In den besonders bevorzugten Ausführungsformen eines Abschiebewagens mit zusätzlich kippbarer Abschiebevorrichtung (4) umfasst die dazu vorgesehene Kippvorrichtung (14) mindestens einen, bevorzugt mindestens zwei Kippzylinder (14'), deren Ölversorgung bevorzugt über die Ausstoßzylinder (13a, 13b, 13c) des Ausstoßzylindersystems (13) erfolgt. Darin erfolgt die Ölversorgung der Kippzylinder (14') besonders bevorzugt über die Kolbenstangen der Ausstoßzylinder (13a, 13b, 13c). Dies bringt ebenfalls den Vorteil mit sich, dass auf das Mitführen äußerlich angebrachter flexibler Ölleitungen, mit allen dadurch bedingten Nachteilen, verzichtet werden kann.

Eine solche Ausgestaltung ermöglicht außerdem eine besonders platzsparende Anordnung des Zylindersystems.

In den erfindungsgemäßen Ausführungsformen eines Abschiebewagens wird das Ausstoßzylindersystem (13) innerhalb des Tunnels (9) und unterhalb des Abschiebeschlittens (12) angeordnet. Bei dieser Anordnung befindet sich das Ausstoßzylindersystem (13) somit unter dem Abschiebeschlitten (12) und hinter der über den Tunnelboden (8a) bewegbaren Abschiebefläche (12a, 12b), welche gegebenenfalls in Form eines Keils oder einer schiefen Ebene (12c) ausgebildet sein kann. In derartigen Ausführungsformen ist es weiterhin bevorzugt, dass das Ausstoßzylindersystem (13) nahezu vollständig unter der Ebene des Bodens (8) der Mulde (5) innerhalb des Tunnels (9) und unterhalb des Abschiebeschlittens (12) angeordnet ist. In solchen Anordnungen befindet sich das Ausstoßzylindersystem (13) folglich nahezu bündig am Frontende innerhalb der Mulde (5) und ist auch dadurch zusätzlich durch die Mulde mit dem Tunnel und dem Abschiebeschlitten geschützt. Bei herkömmlichen Abschiebewagen ist das Ausstoßzylindersystem hingegen direkt an der Deichsel hinter der Frontwand (außerhalb der Mulde) und somit in unmittelbarer räumlicher Nähe zur Kupplung an die Zugmaschine angeordnet und kann beim wiederholten Vorgang des An- und Abkoppelns des Abschiebewagens an die Zugmaschine stören oder durch die ungeschützte Positionierung in Mitleidenschaft gezogen werden.

Ein weiterer Vorteil des vorbeschriebenen hydraulischen Zylindersystems (15) liegt darin, dass es damit möglich ist, das maximale Ölvolumen von bis zu 50 l innerhalb des Zylindersystems zu fassen, wodurch auf eine zusätzliche eigene Bordhydraulik verzichtet werden kann.

Beispielhafte und bevorzugte Ausführungsformen erfindungsgemäßer Fahrzeugtransport-Anhänger, Abschiebewagen, Abschiebevorrichtungen und hydraulischer Zylindersysteme zeigen die Figuren 1 bis 7.

Gegenstand der vorliegenden Erfindung sind neben den Fahrzeugtransport-Anhängern und den selbsttragenden Mulden außerdem die vorbeschriebene Abschiebevorrichtung und/oder der vorbeschriebene Abschiebeschlitten sowie das vorbeschriebene Zylindersystem.

### BESCHREIBUNG DER FIGUREN:

Figur 1 zeigt eine schematische Darstellung eines erfindungsgemäßen Fahrzeugtransport-Anhängers mit selbsttragender Mulde (5) auf einem Fahrwerk (1)
Figur 2 zeigt eine schematische Darstellung einer erfindungsgemäßen selbsttragenden Mulde (5)

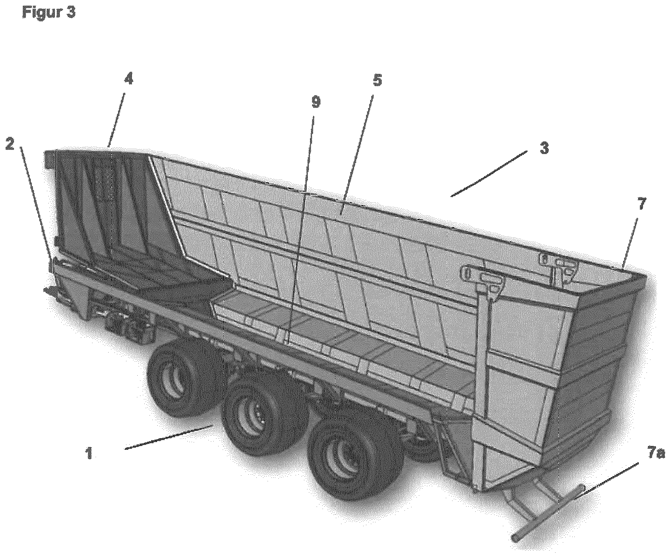

Figur 3 zeigt eine schematische Darstellung eines erfindungsgemäßen Fahrzeugtransport-Anhängers in Form eines Abschiebewagens mit einem Aufbau (3), umfassend die selbsttragende Mulde (5) mit dem Tunnel (9), eine öffenbare Heckklappe (7) mit Unterfahrschutz (7a) und eine Abschiebevorrichtung (4), eine Anhängerdeichsel (2) - unterhalb der Abschiebevorrichtung an der Frontseite des Aufbaus angeordnet - auf einem Fahrwerk (1).

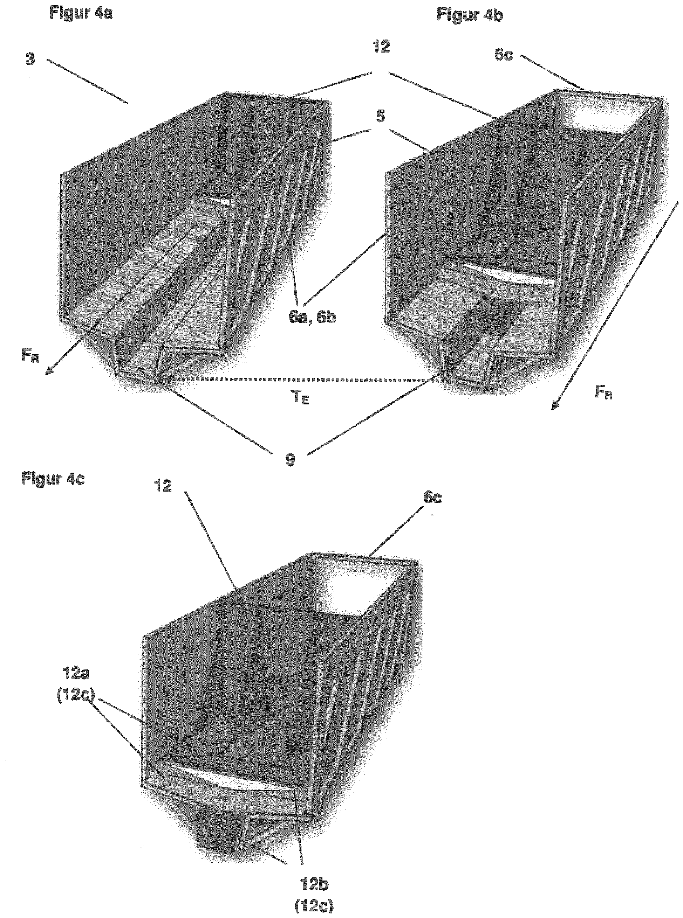

Die Figuren 4a, 4b und 4c zeigen eine schematische Darstellung des Aufbaus (3) eines erfindungsgemäßen Fahrzeugtransport-Anhängers mit einer Abschiebevorrichtung, die innerhalb der Mulde (5) mit den Seitenwänden (6a, 6b) und der Frontwand (6c) angeordnet ist, umfassend einen Abschiebeschlitten (12) mit seinen Abschiebeflächen (12a), die parallel zum Boden der Mulde ausgerichtet sind, und seinen Abschiebeflächen (12b), die parallel zur Frontwand ausgerichtet sind, und die jeweils als keilförmige oder zum Boden der Mulde und/oder zum Tunnelboden abwärts verlaufende schiefe Ebenen ausgebildet sein können, und worin der Abschiebeschlitten (12) entlang der Abschieberichtung (F_{R}) von der Frontseite (Figur 4a) über die Mitte der Mulde (Figur 4b) in Richtung Heckklappe (Figur 4c) beweglich ist.

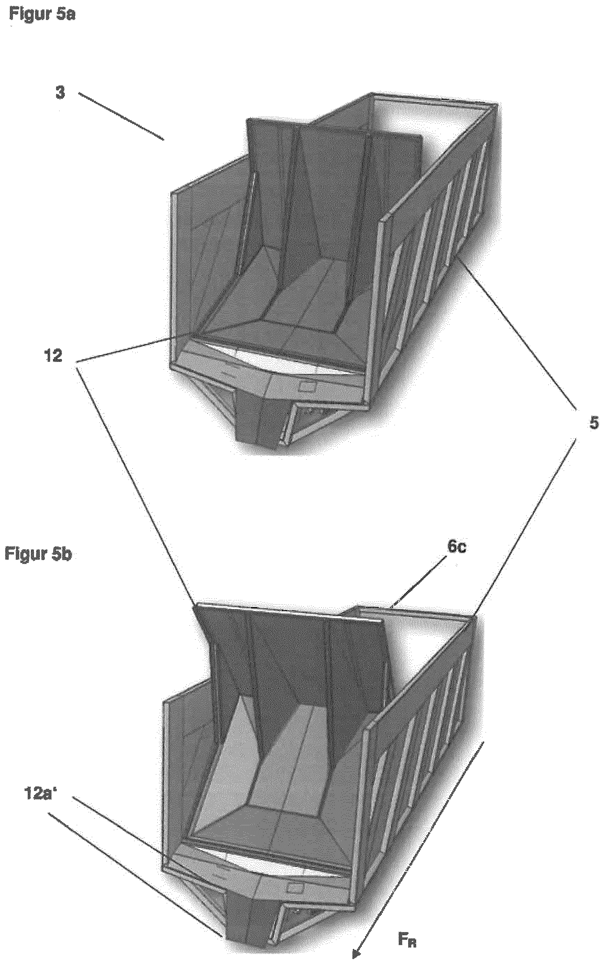

Die Figuren 5a und 5b zeigen eine schematische Darstellung des Aufbaus (3) mit der Mulde (5) eines erfindungsgemäßen Fahrzeugtransport-Anhängers umfassend eine Abschiebevorrichtung, die innerhalb der Mulde (5) entlang der Abschieberichtung (F_{R}) von der Frontseite (6c) bis zum Heck beweglich ist, und am Heck durch Kippen des Abschiebeschlittens (12) über die freie(n) Kante(n) (12a', 12b') der Abschiebefläche (12a, 12b) das Ladegut abkippt.

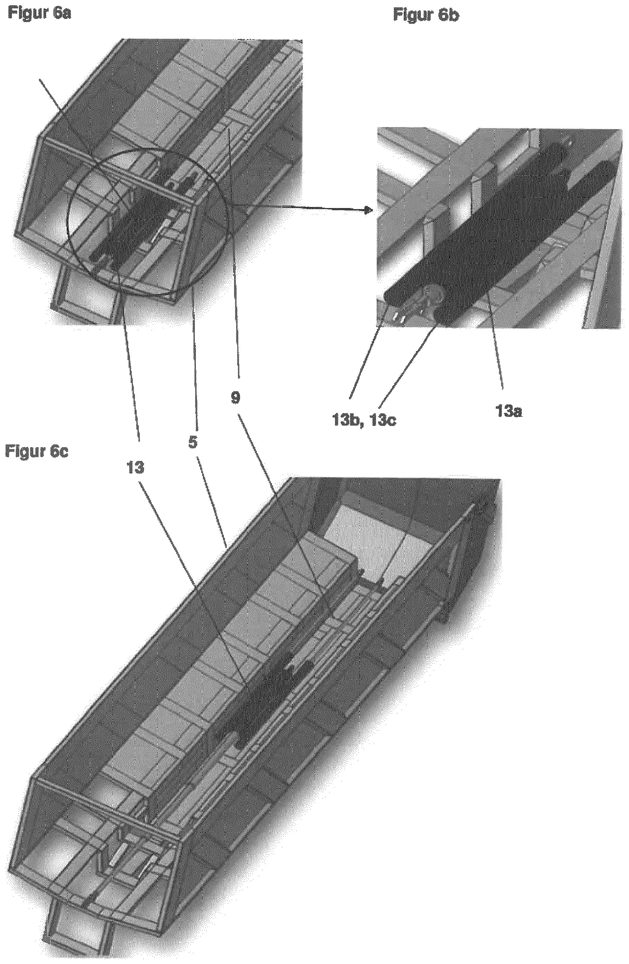

Die Figuren 6a und 6c zeigen eine schematische Darstellung des erfindungsgemäßen Ausstoßzylindersystems (13), welches innerhalb des Tunnels (9) in der Mulde (5) angeordnet ist. Darin zeigt Figur 6a das Ausstoßzylindersystem (13) in eingefahrenem Zustand, entsprechend einer Position des Abschiebeschlittens an der Frontseite der Mulde und Figur 6c zeigt das Ausstoßzylindersystem (13) in ausgefahrenem Zustand, entsprechend einer Position des Abschiebeschlittens am Heck der Mulde. Die Figur 6b zeigt einen Vergrößerungsausschnitt des Ausstoßzylindersystems (13) mit einem mittig angeordneten Teleskopzylinder (13a) und zwei seitlich davon angeordneten doppelwirkenden Ausstoßzylindern (13b, 13c).

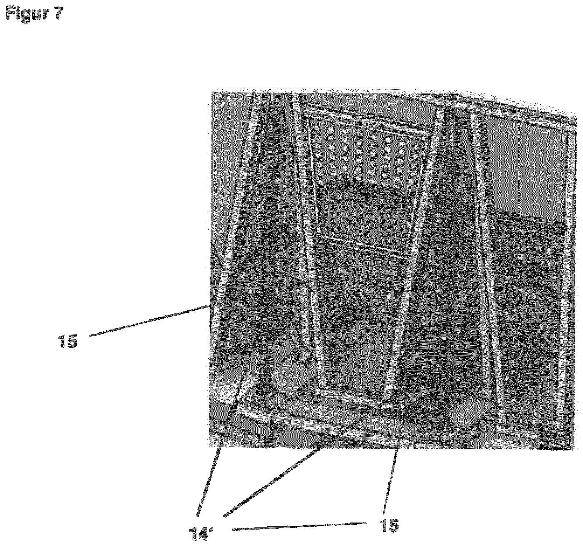

Die Figur 7 zeigt eine schematische Darstellung der Rückseite des Abschiebeschlittens (12) mit der Kippvorrichtung, umfassend die Kippzylinder (14'), welche zusammen mit dem darunter angeordneten Ausstoßzylindersystem (13) das Zylindersystem (15 bilden.

### ERLÄUTERUNG DER BEZUGSZEICHEN:

- (1): Fahrwerk (1)
- (2): Anhängerdeichsel
- (3): Aufbau (3)
- (4): Abschiebevorrichtung
- (5): Mulde
- (6a, 6b): Seitenwände der Mulde
- (6c): Frontwand
- (7): (öffenbare) Heckklappe
- (7a): Unterfahrschutz
- (8): Boden der Mulde
- (B_{E}): Ebene des Bodens
- (8a): Boden des Tunnels
- (9): Tunnel (oder Kanal)
- (9a, 9b): Seitenwände des Tunnels
- (T_{E}): Ebene des Tunnelbodens
- (10): Dach oder Abdeckung
- (11): Aufnahmepunkte zur Befestigung des Fahrwerks
- (12): Abschiebeschlitten
- (12a): Abschiebefläche parallel zum Boden von Mulde / Tunnel
- (12b): Abschiebefläche parallel zur Frontwand
- (12a', 12b'): freie Kante(n) der Abschiebefläche(n) (12a, 12b)
- (12c): Abschiebefläche, die als keilförmige oder zum Boden der Mulde bzw. zum Tunnelboden abwärts verlaufende schiefe Ebenen ausgebildet ist
- (F_{R}): Fahrt- oder Abschieberichtung
- (13): Ausstoßzylindersystem
- (13a): Teleskopzylinder des Ausstoßzylindersystems (13)
- (13b, 13c): doppelwirkende Ausstoßzylinder des Ausstoßzylindersystems (13)
- (14): Kippvorrichtung
- (14'): Kippzylinder
- (15): Zylindersystem, umfassend Ausstoßzylindersystem und ggf. Kippzylinder

## Patentansprüche

1. Fahrzeugtransport-Anhänger mit einem Fahrwerk (1), einem Aufbau (3), einer Anhängerdeichsel (2) und einer Abschiebevorrichtung (4), wobei der Aufbau (3) in selbsttragender Bauweise ausgeführt ist, umfassend
eine Mulde (5) mit
Seitenwänden (6a, 6b),
einer Frontwand (6c),
einer Heckklappe (7) und
einem Boden (8), wobei der Boden eine über die Länge der Mulde (5) verlaufende
Vertiefung in Form eines auf der Ebene des Bodens (B_{E}) offenen Tunnels (9) aufweist; sowie
gegebenenfalls einem Dach oder einer Abdeckung (10);
und worin die Mulde (5)
Aufnahmepunkte (11) zur Befestigung des Fahrwerks (1) aufweist, und worin die Abschiebevorrichtung (4)
einen Abschiebeschlitten (12) und
ein Zylindersystem (15) mit einem Ausstoßzylindersystem (13) umfasst, mittels dessen der Abschiebeschlitten (12) entlang einer Fahrt- oder Abschieberichtung (F_{R}) bewegbar ist,
**dadurch gekennzeichnet, dass** das Ausstoßzylindersystem (13) innerhalb des Tunnels (9) und unterhalb des Abschiebeschlittens (12) angeordnet ist.

2. Fahrzeugtransport-Anhänger gemäß Anspruch 1, worin es sich um einen Schwerlastanhänger handelt.

3. Fahrzeugtransport-Anhänger gemäß Anspruch 1 oder 2, worin der Aufbau (3) in leichtbauweise ausgeführt ist.

4. Fahrzeugtransport-Anhänger gemäß einem der vorhergehenden Ansprüche, worin ein Unterfahrschutz (7a) an der Heckklappe (7) angeordnet ist.

5. Fahrzeugtransport-Anhänger gemäß einem der vorhergehenden Ansprüche, worin die Abschiebevorrichtung (4) einen Abschiebeschlitten (12) aus wenigstens zwei zueinander im Wesentlichen L-förmig angeordneten Abschiebeflächen (12a, 12b) umfasst, wobei mindestens eine der Abschiebeflächen (12a) parallel zu der Ebene des Bodens (B_{E}) verläuft und mindestens eine der Abschiebeflächen (12b) L-förmig dazu und parallel zur Frontwand (6c) angeordnet ist, und worin mindestens eine der Abschiebeflächen (12a, 12b) so ausgebildet ist, dass sie das in dem Tunnel (9) befindliche Ladegut abschiebt, und wobei die Abschiebeflächen (12a, 12b) jeweils so dimensioniert sind, dass sie jeweils über die gesamte Breite der Mulde (5) und des Tunnels (9) und entlang der Höhe der Mulde (5) verlaufen und sich bis zur Ebene des Tunnelbodens (T_{E}) erstrecken, so dass die Abschiebeflächen (12a, 12b) den Querschnitt der Mulde (5) mit dem Tunnel (9) ausfüllen.

6. Fahrzeugtransport-Anhänger gemäß Anspruch 5, worin die Abschiebeflächen (12a, 12b) des Schlittens (12) der Abschiebevorrichtung (4) so ausgestaltet sind, daß sie im Wesentlichen bündig über die Ebene des Bodens (B_{E}) und die Ebene des Tunnelbodens (T_{E}) und entlang der Seitenwände der Mulde (5) und der Seitenwände des Tunnels (9a, 9b) in einer Fahrt- oder Abschieberichtung (F_{R}) beweglich sind und damit ein in der Mulde (5) und in dem Tunnel (9) vorhandenes Ladegut über die Ladefläche entlang der Fahrt- oder Abschieberichtung (F_{R})) über die geöffnete Heckklappe (7) abschiebbar ist.

7. Fahrzeugtransport-Anhänger gemäß einem der vorhergehenden Ansprüche, worin die Abschiebevorrichtung (4) eine Kippvorrichtung (14) aufweist, womit der Abschiebeschlitten (12) der Abschiebevorrichtung (4) außerdem über die freie Kante (12a', 12b') der Abschiebefläche (12a, 12b) kippbar ist.

8. Fahrzeugtransport-Anhänger gemäß einem der vorhergehenden Ansprüche, worin die Abschiebevorrichtung (4) außerdem eine Kippvorrichtung (14) mit mindestens einem Kippzylinder (14') umfasst.

9. Fahrzeugtransport-Anhänger nach einem der vorhergehenden Ansprüche, worin das Ausstoßzylindersystem (13) und/oder der mindestens eine Kippzylinder (14') des Zylindersystems (15) hydraulische Zylinder sind.

10. Fahrzeugtransport-Anhänger nach Anspruch 9, worin die Ölversorgung der hydraulischen Zylinder innerhalb der Zylinder verläuft.

11. Fahrzeugtransport-Anhänger nach Anspruch 9 oder 10, worin die Ölversorgung der hydraulischen Zylinder über starre Ölleitungen innerhalb der Zylinder erfolgt.

12. Fahrzeugtransport-Anhänger nach einem der Ansprüche 9 bis 11, worin die Ölversorgung des mindestens einen Kippzylinders (14') der Kippvorrichtung (14) über die Ausstoßzylinder (13a, 13b, 13c) des Ausstoßzylindersystems (13) erfolgt.

13. Fahrzeugtransport-Anhänger gemäß einem der vorhergehenden Ansprüche, worin das Ausstoßzylindersystem (13) des Zylindersystems (15) mindestens einen Teleskopzylinder (13a) und mindestens zwei doppelwirkende Ausstoßzylinder (13b, 13c) umfasst, mittels derer der Abschiebeschlitten (12) entlang der Fahrt- oder Abschieberichtung (Fr) bewegbar ist.

14. Fahrzeugtransport-Anhänger nach Anspruch 13, worin das Ausstoßzylindersystem (13) nahezu vollständig und bündig zur Frontwand (6c) innerhalb der Mulde (5) angeordnet ist.

15. Fahrzeugtransport-Anhänger nach einem der vorhergehenden Ansprüche zum Einsatz als landwirtschaftlicher Fahrzeugtransport-Anhänger.

## Claims

1. Vehicle transport trailer with a running gear (1), a bodywork (3), a trailer drawbar (2) and a push-off device (4), wherein the bodywork (3) is constructed in a self-supporting manner, comprising
a trough (5) with
side walls (6a, 6b),
a front wall (6c),
a tailgate (7) and
a bottom (8), wherein the bottom has a recess extending over the length of the trough (5) in the form of a tunnel (9) open at the plane of the bottom (B_{E}); and optionally a roof or cover (19);
and wherein the trough (5)
has mounting points (11) for fixation of the running gear (1),
and wherein the push-off device (4) comprises a push-off carriage (12) and a cylinder system (15) with an ejection cylinder system (13), by means of which the push-off carriage (12) is movable along a direction of motion or of conveyance (F_{R}),
**characterized in that** the ejection cylinder system (13) is arranged within the tunnel (9) and below the push-off carriage (12).

2. A vehicle transport trailer according to claim 1, wherein it is a heavy-duty trailer.

3. A vehicle transport trailer according to claim 1 or 2, wherein the bodywork (3) is constructed in lightweight construction.

4. A vehicle transport trailer according to any of the previous claims, wherein an underride guard (7a) is arranged on the tailgate (7).

5. A vehicle transport trailer according to any of the previous claims, wherein the push-off device (4) comprises a push-off carriage (12) consisting of at least two push-off faces (12a, 12b) substantially arranged to each other in an L-shape, wherein at least one of the push-off faces (12a) is positioned parallel to the plane of the bottom (B_{E}) and at least one of the push-off faces (12b) is arranged thereto in the shape of an L and parallel to the front wall (6c), and wherein at least one of the push-off faces (12a, 12b) is configured such that it pushes off the load located in the tunnel (9), and wherein the push-off faces (12a, 12b) are each dimensioned such that they extend over the entire width of the trough (5) and of the tunnel (9) and along the height of the trough (5), and extend up to the plane of the tunnel floor (T_{E}), so that the push-off faces (12a, 12b) fill the cross-section of the trough (5) with the tunnel (9).

6. A vehicle transport trailer according to claim 5, wherein the push-off faces (12a, 12b) of the carriage (12) of the push-off device (4) are configured such that they are movable substantially flush over the plane of the bottom (B_{E}) and the plane of the tunnel floor (T_{E}) and along the side walls of the trough (5) and the side walls of the tunnel (9a, 9b) in a direction of motion or of conveyance (F_{R}) and thus a load present in the trough (5) and in the tunnel (9) can be pushed off along the loading area in the direction of motion or of conveyance (F_{R}) via the open tailgate (7).

7. A vehicle transport trailer according to any of the previous claims, wherein the push-off device (4) comprises a tilting device (14), whereby the push-off carriage (12) of the push-off device (4) is also tiltable over the free edge (12a', 12b') of the push-off face (12a, 12b).

8. A vehicle transport trailer according to any of the previous claims, wherein the push-off device (4) further comprises a tilting device (14) with at least one tilt cylinder (14').

9. A vehicle transport trailer according to any of the previous claims, wherein the ejection cylinder system (13) and/or the at least one tilt cylinder (14') of the cylinder system (15) are hydraulic cylinders.

10. A vehicle transport trailer according to claim 9, wherein the oil supply of the hydraulic cylinders lies inside of the cylinders.

11. A vehicle transport trailer according to claim 9 or 10, wherein the oil supply of the hydraulic cylinders is effected via rigid oil lines inside of the cylinders.

12. A vehicle transport trailer according to one of the claims 9 to 11, wherein the oil supply of the at least one tilt cylinder (14') of the tilting device (14) is effected via the ejection cylinders (13a, 13b, 13c) of the ejection cylinder system (13).

13. A vehicle transport trailer according to any of the previous claims, wherein the ejection cylinder system (13) of the cylinder system (15) comprises at least one telescopic cylinder (13a) and at least two double-acting ejection cylinders (13b, 13c), by means of which the push-off carriage (12) is movable along the direction of motion or of conveyance (F_{R}).

14. A vehicle transport trailer according to claim 13, wherein the ejection cylinder system (13) is arranged almost completely and flush with the front wall (6c) within the trough (5).

15. Vehicle transport trailer according to any of the previous claims for the use as an agricultural vehicle transport trailer.

## Revendications

1. Remorque de transport de véhicule comprenant un châssis (1), une carrosserie (3), un timon d'attelage (2) et un dispositif de décharge (4), la carrosserie (3) étant configurée de manière autoportante, comprenant
une cuvette (5) comprenant
des parois latérales (6a, 6b),
une paroi avant (6c),
un couvercle arrière (7) et
un fond (8), le fond comprenant une cavité, qui s'étend sur la longueur de la cuvette (5) et qui a la forme d'un tunnel ouvert au niveau du fond (B_{E}) ; ainsi que
le cas échéant, un toit ou une couverture (10) ;
et la cuvette (5) comprenant
des points de réception (11) pour fixer le châssis (1), et
le dispositif de décharge (4)
comprenant un chariot de décharge (12) et
un système de cylindres (15) comprenant un système de cylindres de décharge (13), par moyen duquel le chariot de décharge (12) est déplaçable le long d'une direction de circulation ou d'une direction de décharge (F_{R}),
**caractérisé en ce que** le système de cylindres de décharge (13) est disposé à l'intérieur du tunnel (9) et en-dessous du chariot de décharge (12).

2. Remorque de transport de véhicule selon la revendication 1, dans lequel il s'agit d'une remorque poids-lourd.

3. Remorque de transport de véhicule selon la revendication 1 ou la revendication 2, dans lequel le châssis (3) est une construction légère.

4. Remorque de transport de véhicule selon l'une des revendications précédentes, dans lequel un anti-encastrement (7a) est disposé sur le couvercle arrière (7).

5. Remorque de transport de véhicule selon l'une des revendications précédentes, dans lequel le dispositif de décharge (4) comprend un chariot de décharge (12) composé d'au moins deux surfaces de décharge (12 a, 12b), qui sont disposées l'une par rapport à l'autre essentiellement sous forme en L, au moins une des surfaces de décharge (12a) s'étendant parallèlement au plan du fond (B_{E}) et au moins une des surfaces de décharge (12b) étant disposée en forme de L par rapport à celle-ci et parallèlement à la paroi avant (6c), et au moins une des surfaces de décharge (12a, 12b) étant configurée, de sorte qu'elle décharge la cargaison, qui se trouve dans le tunnel (9), et les surfaces de décharge (12, 12b) étant chacune dimensionnées de sorte qu'elles s'étendent chacune sur toute la largeur de la cuvette (5) et du tunnel (9) et le long de la hauteur de la cuvette (5) jusqu'au plan du fond de tunnel (T_{E}), de sorte que les surfaces de décharge (12a, 12b) remplissent la section transversale de la cuvette (5) avec le tunnel (9).

6. Remorque de transport de véhicule selon la revendication 5, dans lequel les surfaces de décharge (12a, 12b) du chariot (12) du dispositif de décharge (4) sont configurées, de sorte qu'elles sont déplaçables de manière essentiellement affleurant sur le plan du fond (B_{E}) et le plan du fond de tunnel (T_{E}) et le long des parois latérales du la cuvette (5) et des parois latérales du tunnel (9a, 9b) dans une direction de circulation ou d'une direction de décharge (F_{R}) et ainsi une cargaison, qui se trouve dans la cuvette (5) et dans le tunnel (9), peut être déchargée via la surface de chargement le long de la direction de circulation ou de la direction de décharge (F_{R}) à travers le couvercle arrière ouvert (7).

7. Remorque de transport de véhicule selon l'une des revendications précédentes, dans lequel le dispositif de décharge (4) comprend un dispositif basculant (14), par moyen duquel le chariot de décharge (12) du dispositif de décharge (4) peut en outre être basculé par-dessus du bord libre (12a', 12b') de la surface de décharge (12a, 12b).

8. Remorque de transport de véhicule selon l'une des revendications précédentes, dans lequel le dispositif de décharge (4) comprend en outre un dispositif basculant (14) avec au moins un cylindre basculant (14').

9. Remorque de transport de véhicule selon l'une des revendications précédentes, dans lequel le système de cylindres de décharge (13) et/ou l'au moins un cylindre basculant (14') du système de cylindres (15) sont des cylindres hydrauliques.

10. Remorque de transport de véhicule selon la revendication 9, dans lequel l'alimentation en huile des cylindres hydrauliques s'étend à l'intérieur des cylindres.

11. Remorque de transport de véhicule selon la revendication 9 ou la revendication 10, dans lequel l'alimentation en huile des cylindres hydrauliques se fait via des conduites d'huile rigides à l'intérieur des cylindres.

12. Remorque de transport de véhicule selon l'une des revendications 9 à 11, dans lequel l'alimentation en huile de l'au moins un cylindre basculant (14') du dispositif basculant (14) se fait via les cylindres de décharge (13a, 13b, 13c) du système de cylindres de décharge (13).

13. Remorque de transport de véhicule selon l'une des revendications précédentes, dans lequel le système de cylindres de décharge (13) du système de cylindres (15) comprend au moins un cylindre télescopique (13a) et au moins deux cylindres de décharge (13b, 13c) à double effet, par moyen desquels le chariot de décharge (12) est déplaçable le long de la direction de circulation ou de la direction de décharge (F_{R}).

14. Remorque de transport de véhicule selon la revendication 13, dans lequel le système de cylindres de décharge (13) est presque complètement disposé de manière affleurant avec la paroi avant (6c) à l'intérieur de la cuvette (5).

15. Remorque de transport de véhicule selon l'une des revendications précédentes destinée à l'utilisation comme remorque de transport de véhicule agricole.
